# EUROPEAN PATENT SPECIFICATION

(11) **EP 4 172 607 B1**
(45) Date of publication and mention of the grant of the patent: **23.04.2025**
(21) Application number: 20776248.5
(22) Date of filing: 21.07.2020
(51) Int. Cl.: G01N 27/12

(54) **GAS SENSING STRUCTURE AND METHOD OF FABRICATION THEREOF**
GAS-SENSITIVE STRUKTUR UND VERFAHREN FÜR DEREN HERSTELLUNG
STRUCTURE SENSIBLE AUX GAZ ET PROCEDE DE SA PRODUCTION

(43) Date of publication of application: 03.05.2023
(73) Proprietor: Huawei Technologies Co., Ltd., Longgang District, Shenzhen, Guangdong 518129 (CN)
(72) Inventor: FEDOROV, Fedor Sergeevich, Moscow, 143026 (RU); AINUL, Yaqin, Moscow, 143026 (RU); NASIBULIN, Albert Galiyevich, Moscow, 143026 (RU); PIKHLETSKY, Mikhail Viktorovich, Shenzhen Guangdong, 518129 (CN); QIU, Chen, Shenzhen Guangdong, 518129 (CN); LI, Hang, Shenzhen Guangdong, 518129 (CN); GARTSEEV, Ilya Borisovich, Shenzhen Guangdong, 518129 (CN)
(74) Representative: Epping - Hermann - Fischer
(86) International application number: PCT/RU2020/000362
(87) International publication number: WO 2022/019794

(56) References cited:
- CN-A- 107 132 253
- US-A1- 2013 062 211
- US-A1- 2016 216 228
- US-A1- 2017 038 326
- US-A1- 2020 062 598

## Description

### TECHNICAL FIELD

The present disclosure relates generally to the field of gas detection, and particularly to a gas sensing structure that is suitable for detection of gases (especially, formaldehyde) in the air, a method of its fabrication, as well as its use in a gas sensor and a multi-gas sensing apparatus.

### BACKGROUND

There are toxic gaseous substances which can cause health problems when a human body is exposed thereto even for a relatively short time. One of them is formaldehyde which is industrially used in a versatile manner (for example, in the production of plastics, in the construction industry, in the textile industry for crease-resistant and easy-care finishing, in the agricultural and food industries as a preserving agent, in cosmetics, body and mouth care products as a disinfectant and sterilant, etc.). Despite its high usability, short-term exposure to small formaldehyde doses (0.1-1.0 ppm) is commonly accompanied by annoyance symptoms related to its inhalation in the upper respiratory tract. Exposure to higher formaldehyde doses have been reported to induce various manifestations including headache, drowsiness, and irritation to eye, nose, and throat. Much higher formaldehyde doses (43 ppm) induce cytotoxic effects (cell and tissue damage). Moreover, formaldehyde has been classified as a human carcinogen because it causes nasopharyngeal cancer, pulmonary damage and probably leukemia at doses higher than 6 ppm.

Thus, formaldehyde concentrations which need to be detected are rather small - at the level of several tens of ppb. This makes it difficult to provide effective and rapid detection and measurement of formaldehyde in the air. Currently available portable formaldehyde sensors provide an insufficient limit of detection, which may lead to an erroneous reduction of an imminent health risk caused by formaldehyde exposure. Moreover, they demonstrate poor performance in terms of selective detection or classification of gas admixtures in the air.

Document US 2020/062598 A1 describes a method and a system of Pt and SnO₂ co-functionalized on single-walled carbon nanotubes (SWNTs) assembled on microelectrodes by electrochemical deposition where Pt nanoparticle's morphology, size, and density were tuned by controlling electrodeposition potential and time. The method and system to obtain the optimum condition for Pt decorated SnO₂/SWNTs (Pt/SnO₂/SWNTs) were performed and also correlate with its CO sensing performance. Light dependent sensing performance was examined with red, green and UV LED light under room temperature. With the assistance of the UV LED light illumination, the sensitivity of Pt/SnO₂/SWNTs was further enhanced to 2.1 percent /ppmᵥ to 50 ppmᵥ of CO and the detection limit can push down to 0.05 pp mᵥ.

Document US 2016/216228 A1 relates to a method of co-functionalizing single-walled carbon nanotubes for gas sensors, which includes the steps of: fabricating single-walled carbon nanotube interconnects; synthesizing tin oxide onto the single-walled carbon nanotube interconnects; and synthesizing metal nanoparticles onto the tin oxide coated single-walled carbon nanotube interconnects.

Document CN 107 132 253 A aims to solve a plurality of problems existing in an existing VOCs (Volatile Organic Compounds) gas sensor, and provides a novel method for preparing a gas sensitive material based on a modified CNT (Carbon Nanotube)/metal nanoparticle (MNPs)/metal oxide nanoparticle (MONPs) hybrid material. The material can be applied to manufacturing of a low-energy-consumption high-sensitivity VOCs gas sensor. This document further provides a manufacturing method of the VOCs gas sensor based on a CNT/MNPs/MONPs gas sensitive material. By adopting the preparation method, the VOC gas sensor can be minimized, is high in consistency and super quick in response, and has extremely-low detection power consumption at the same time. Meanwhile, a preparation process flow is simple, and scale production can be realized. The gas sensor is structurally characterized by comprising a polyimide (PI) flexible substrate layer undergoing a hydrophobic treatment, a metal electrode layer and a CNT/MNPs/MONPs gas sensitive material layer in sequenced from bottom to top.

### SUMMARY

This summary is provided to introduce a selection of concepts in a simplified form that are further described below in the detailed description. This summary is not intended to identify key features of the present disclosure, nor is it intended to be used to limit the scope of the present disclosure.

The present invention is set out by the set of appended claims. In the following, parts of the description and drawing referring to examples, which are not covered by the claims are not presented as embodiments of the invention, but as illustrative examples useful for understanding the invention. In particular, the embodiments of the invention are determined by the appended claims.

It is an objective of the present disclosure to provide a technical solution that allows detection of gases (especially, formaldehyde) in the air.

The objective above is achieved by the features of the independent claims in the appended claims. Further embodiments and examples are apparent from the dependent claims, the detailed description and the accompanying drawings.

According to a first aspect, a gas sensing structure is provided. The gas sensing structure comprises a carbon nanotube (CNT) film, an n-type or p-type transition metal oxide (TMO) layer deposited on the CNT film, and noble metal nanoparticles deposited on the n-type or p-type TMO layer. This gas sensing structure is susceptible to changes in concentrations of different gases, i.e. gas vapors present in the air. More specifically, it may be used to detect changes in formaldehyde concentration in the air, starting from few parts per million (ppm) to few tens of parts per billion (ppb).

In one embodiment of the first aspect, the CNT film is made of single-walled CNTs. The single-walled CNTs may provide a substrate with good conductivity which is a framework or support for the thin TMO layer.

In one embodiment of the first aspect, the n-type or p-type TMO layer comprises one of Mn₃O₄, TiO₂, ZnO, SnO₂, NiO, Fe₂O₃, and Cu₂O. Each of these oxides may provide a high sensitivity of the gas sensing structure according to the first aspect.

In one embodiment of the first aspect, the noble metal nanoparticles are made of Au, Ag, Pt, Pd. Similarly, the nanoparticles of Au, Ag, Pt or Pd may increase the sensitivity of the gas sensing structure according to the first aspect.

According to the invention, the CNT film has a thickness of 20 to 100 nm. Such a thickness of the CNT film may enable its easier further processing (e.g., plasma treatment, TMO deposition, etc.). Moreover, it may assure the mechanical stability of the CNT film in particular and the gas sensing structure in general.

According to the invention, the n-type or p-type TMO layer has a thickness of 0.5 to 15 nm, and preferably 1.2 nm to 8 nm. Such a thickness of the TMO layer may provide a high response of the gas sensing structure according to the first aspect towards gas vapors.

According to a second aspect, a method for fabricating a gas sensing structure is provided. The method starts with the step of synthesizing a carbon nanotube (CNT) film. Then, the method proceeds to the steps of arranging the CNT film on a plate and depositing an n-type or p-type transition metal oxide (TMO) layer on the CNT film. After that, a next step is initiated, in which noble metal nanoparticles are deposited on the n-type or p-type TMO layer. The method ends up with the step of releasing the CNT film from the plate. By so doing, it is possible to provide a gas sensing structure that is susceptible to changes in concentrations of different gases, i.e. gas vapors present in the air. More specifically, such a gas sensing structure may be used to detect changes in formaldehyde concentration in the air, starting from few ppm to few tens of ppb. In one embodiment of the second aspect, the step of synthesizing the CNT film is performed by using an aerosol chemical vapor deposition technique, and the synthesized CNT film is comprised of single-walled CNTs. By using this technique, it is possible to obtain single-walled CNT films of high quality. In turn, the single-walled CNTs may provide a substrate with good conductivity which may serve as a framework or support for the thin TMO layer.

In one embodiment of the second aspect, the plate has an opening made therethrough, and the step of arranging the CNT film comprises arranging the CNT film such that the CNT film covers the opening on one side of the plate. The presence of the opening allows the CNT film to be treated from above and from below simultaneously. For example, the opening may enable uniform plasma treatment, TMO deposition and doping by noble metal nanoparticles, as well as allow dry processing of the CNT film. Furthermore, the opening may make it easier to release the ultrathin CNT film from the plate at the final step of the method according to the second aspect.

In one embodiment of the second aspect, the step of depositing the n-type or p-type TMO layer is performed by using an atomic layer deposition (ALD) technique. In this embodiment, the n-type or p-type TMO layer may comprise one of Mn₃O₄, TiO₂, ZnO, SnO₂, NiO, Fe₂O₃, and Cu₂O, and the plate may be made of a material that withstands temperatures used in the ALD technique. The ALD technique allows one to obtain the thin and uniform TMO layer, thereby facilitating the miniaturization and high sensitivity of the gas sensing structure.

In one embodiment of the second aspect, the step of depositing the noble metal nanoparticles is performed by using an aerosol doping technique, and the noble metal nanoparticles are made of one of Au, Ag, Pt, Pd. The aerosol doping technique allows the nanoparticles to be distributed uniformly on the surface of the TMO oxide, with no nanoparticle agglomeration being formed.

In one embodiment of the second aspect, the noble metal nanoparticles are made of Au, and the aerosol doping technique is based on using HAuCl₄ as a dopant. HAuCl₄ is an Au containing compound which is relatively stable and soluble in various solvents (e.g., ethanol, acetonitrile, tetrahydrofuran, dimethylformamide, etc.).

In one embodiment of the second aspect, the method further comprises, before the step of depositing the TMO layer, the step of forming defect sites along sidewalls of CNTs of the CNT film by treating the CNT film in a low-frequency oxygen plasma. The presence of the defect sites may facilitate better deposition of the TMO oxide on the CNT film.

According to a third aspect, a gas sensor is provided. The gas sensor comprises a substrate, a signal electrode structure, and the gas sensing structure according to the first aspect. The signal electrode structure is formed on the substrate and comprises at least two signal electrodes having a gap therebetween. The gas sensing structure according to the first aspect is arranged on the signal electrode structure such that the gas sensing structure bridges the gap between the at least two signal electrodes. Changes in a gaseous environment lead to changes in a measured resistance of the gas sensing structure. Given this, the gas sensor according to the third aspect represents a chemiresistive sensor. With such configuration, the gas sensor is able to detect changes in concentrations of different gases, i.e. gas vapors present in the air. More specifically, it may be used to detect changes in formaldehyde concentration in the air, starting from few ppm to few tens of ppb. Moreover, the gas sensor according to the third aspect is portable, stable, reversible, has a low power consumption, and their response time might be as good as 1-10 s.

In one embodiment of the third aspect, the substrate is made of a dielectric or dielectric-coated material that withstands temperatures in a range from a room temperature up to 400°C. This may allow the gas sensor according to the third aspect to operate in a wide temperature range.

In one embodiment of the third aspect, the gas sensor further comprises a heater and a thermoresistor that are both formed on the substrate for temperature control. This may allow one to carry out temperature calibration of the gas sensor according to the third aspect with respect to each gas present in the air.

In one embodiment of the third aspect, the gas sensor is configured to detect formaldehyde, ethanol or acetone in ambient air. This may make the gas sensor according to the third aspect more flexible in use. In particular, the gas sensor according to the third aspect may be trained to detect these and other gas vapors in the air.

According to a fourth aspect, a multi-gas sensing apparatus is provided. The apparatus comprises the gas sensor according to the third aspect, at least one processor and a memory. In this case, it is required that the signal electrode structure of the gas sensor comprises at least three pairs of the adjacent signal electrodes bridged by the gas sensing structure according to the first aspect. The memory is coupled to the at least one processor and stores processor-executable instructions. Being executed by the at least one processor, the processor-executable instructions cause the at least one processor to receive measurement signals from the gas sensor and use them to determine whether there is at least one of formaldehyde, ethanol and acetone in ambient air. With such configuration, the apparatus may allow selective determination of gas signals from the gas sensor included therein, thereby facilitating detection of different gases present in the air.

In one embodiment of the fourth aspect, the at least one processor is configured to perform said determining by using a pattern recognition algorithm. By using the pattern recognition algorithm, such, for example, as Linear Discriminant Analysis (LDA), Principal Component Analysis (PCA), etc., it is possible to provide selective detection or classification of different gas vapors in the air.

Other features and advantages of the present disclosure will be apparent upon reading the following detailed description and reviewing the accompanying drawings.

### BRIEF DESCRIPTION OF THE DRAWINGS

FIG. 1 shows a schematic cross-sectional view of a CNT included in a CNT film of a gas sensing structure in accordance with one exemplary example;
FIG. 2 shows a flowchart of a method for fabricating the gas sensing structure in accordance with one exemplary example;
FIG. 3 shows a schematic top view of a gas sensor in accordance with one exemplary example;
FIG. 4 schematically shows a multi-gas sensing apparatus in accordance with one exemplary example;
FIGs. 5A and 5B show scanning electron microscope (SEM) images of the gas sensor design and the fabricated gas sensing structure, respectively;
FIG. 6 shows a block diagram of an experimental setup for gas sensing tests in accordance with one exemplary example;
FIGs. 7A-7D show responses of the gas sensor to formaldehyde (HCOH) with different concentrations in a mixture with air at different temperatures;
FIGs. 8A and 8B show a response-concentration dependence and a limit of detection, respectively, of the gas sensor, which are obtained by using the responses shown in FIGs. 7A-7D; and
FIG. 9 shows results of Linear Discriminant Analysis (LDA) applied to measurement signals from an array of gas sensors used to distinguish between different gases present in the air.

### DETAILED DESCRIPTION

Various examples of the present disclosure are further described in more detail with reference to the accompanying drawings. However, the present disclosure may be embodied in many other forms and should not be construed as limited to any certain structure or function discussed in the following description. In contrast, these examples are provided to make the description of the present disclosure detailed and complete.

According to the detailed description, it will be apparent to the ones skilled in the art that the scope of the present disclosure encompasses any example thereof, which is disclosed herein, irrespective of whether this example is implemented independently or in concert with any other example of the present disclosure. For example, the structure, device, apparatus and/or method disclosed herein may be implemented in practice using any numbers of the examples provided herein. Furthermore, it should be understood that any example of the present disclosure may be implemented using one or more of the elements presented in the appended claims.

The word "exemplary" is used herein in the meaning of "used as an illustration". Unless otherwise stated, any example described herein as "exemplary" should not be construed as preferable or having an advantage over other examples.

In the examples disclosed herein, the term "sense" and its derivatives, such as "sensing", "sensor", etc., may refer to an action, operation or step intended to detect gases (especially, formaldehyde), i.e. gas vapors in the air and measure the concertation thereof. Correspondingly, the term "gas sensing" may be considered similar to "gas detection", the term "gas sensor" may be considered similar to the "gas detector", and so on.

Although the examples disclosed herein are mostly related to formaldehyde detection, this should not be construed as any limitation of the present disclosure - i.e. the examples disclosed herein may be similarly and equally used in relation to any other (toxic and/or nontoxic) gases and/or vapors of volatile organic and/or inorganic compounds (VOCs) present in the air. For example, the examples disclosed herein may be used to detect vapors of ethanol, isopropanol and/or acetone in the air.

The most popular method for formaldehyde detection and quantitation is a high-performance liquid chromatography (HPLC) technique which is, though, generally applied to analyze formaldehyde in liquid phase. The combination of the HPLC technique and a gas chromatography technique coupled with mass spectrometry or fluorescent analysis is characterized by high sensitivity and selectivity. There are also other methods for formaldehyde detection, such, for example, as ion chromatography and polarography. However, all these methods require a rather bulky detection apparatus that, at the same time, is rather expensive and has a high power consumption.

Given this and due to the high danger of formaldehyde intoxication and its health risk, various small-scale formaldehyde sensors based on the use of sensing materials as receptors or transducers have been developed in recent years. Most of these sensors are conductometric ones and allow for real-time measurement and day-to-day use. As the sensing materials, these sensors may use metal oxides with nanostructured morphologies, such as nanoparticles, nanotubes, nanofibers, nanowires, nanorods, in order to detect the vapors of the VOCs (including formaldehyde) in the air. However, the existing small-scale formaldehyde sensors still suffer from an insufficiently low detection limit, high power consumption and slow response, as well as demonstrate poor performance in terms of selective detection or classification of gas admixtures in the air.

The examples disclosed herein provide a technical solution that allows mitigating or even eliminating the above-sounded drawbacks peculiar to the prior art. In particular, the technical solution disclosed herein enables detection of gases (especially, formaldehyde) in the air by using an ultrathin gas sensing structure comprising a carbon nanotube (CNT) film, an n-type or p-type transition metal oxide (TMO) layer deposited on the CNT film, and noble metal nanoparticles deposited on the TMO layer. Such a gas sensing structure is characterized by high sensitivity. For example, it is susceptible to changes of formaldehyde concentration in the air at levels starting from few ppm to few tens of ppb. Moreover, a gas sensor based on the gas sensing structure is portable, stable, reversible, has a low power consumption, and its response time may be as good as 1-10 s. To provide the possibility of detecting different gases in the air, a multi-sensor approach based on a pattern recognition algorithm is also disclosed.

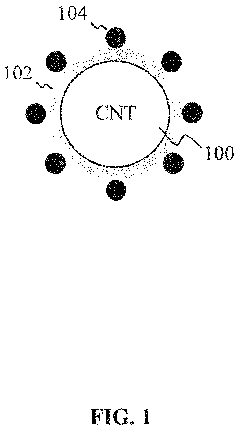

FIG. 1 shows a schematic cross-sectional view of a CNT 100 included in the CNT film of the gas sensing structure in accordance with one exemplary example. Those skilled in the art should understand that the CNT film may comprise multiple CNTs like the CNT 100, and the only one CNT 100 is shown and described here for the sake of simplicity. As shown in FIG. 1, the CNT 100 is covered by an n-type or p-type TMO layer 102. The TMO layer 102 is in turn covered by noble metal nanoparticles 104. It should be noted that the CNT 100, the TMO layer 102 and the nanoparticles 104 are shown significantly enlarged and without observing the ratio of sizes therebetween in FIG. 1 for convenience of description. In real practice, the CNT size is of few nm, the whole CNT film has a thickness of 20 to 100 nm, and the TMO layer 102 has a thickness of 0.5 to 15 nm (more preferably 1.2 nm to 8 nm), thereby providing the ultrathin gas sensing structure. The CNT 100 may be a single-walled CNT (SWCNT), whereupon the CNT film is a SWCNT film. The n-type or p-type TMO layer 102 may be selected from the group of TMOs comprising Mn₃O₄, TiO₂, ZnO, SnO₂, NiO, Fe₂O₃, and Cu₂O, depending on particular applications. For example, ZnO is currently one of the most promising oxides with the highest sensitivity to formaldehyde, for which reason it should preferably be used in cases where formaldehyde detection is required. The sensitivity of ZnO may be improved by doping it with proper materials, such as Mn, Sn or CdO. The rest of the TMOs may also be doped with proper materials to provide a desired conductivity type (i.e. p-type or n-type), depending on particular applications. The noble metal nanoparticles 104 may be made of Au, Ag, Pt, Pd. The appearance of the nanoparticles 104 on the TMO layer 102 increases the response of the whole gas sensing structure.

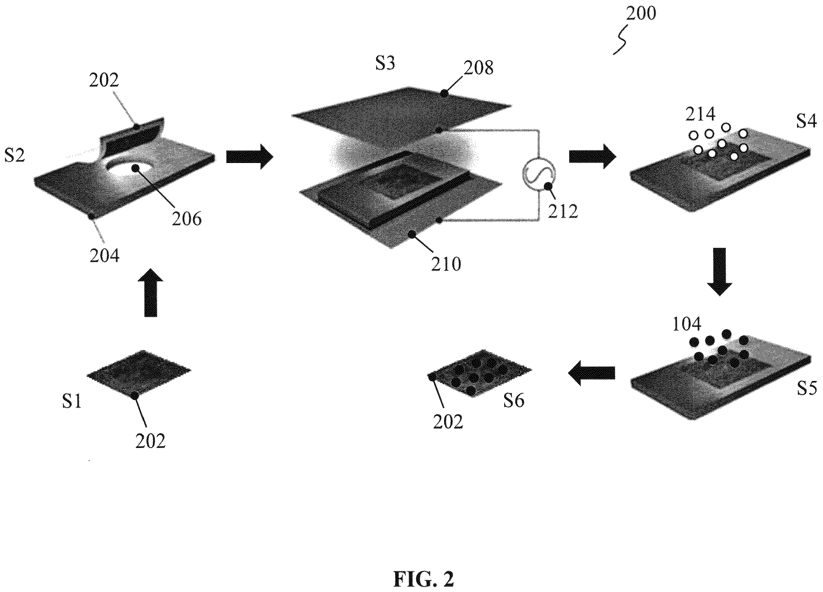

Fig. 2 shows a flowchart of a method 200 for fabricating the gas sensing structure in accordance with one exemplary example. The method 200 is performed as described below.

Step S1: A CNT film 202 is synthesized. The CNT film 202 comprises multiple CNTs 100. The step S1 may be performed by using an aerosol chemical vapor deposition technique which allows obtaining a randomly oriented network of SWCNTs. However, the present disclosure is not limited to this deposition technique, and the CNT film 202 may be produced by using other methods for CNT synthesis, such, for example, as arc discharge, laser ablation, high-pressure carbon monoxide disproportionation, liquid electrolysis, chemical vapor deposition method, etc.

Step S2: The synthesized CNT film 202 is arranged on a plate 204 to implement a free-standing architecture. In other words, the plate 204 is used as a support for the ultrathin (and, therefore, damageable) CNT film 202. As shown in FIG. 2, the plate 204 has an opening 206 which may improve further treatment of the CNT film 202. The CNT film 202 should have a size slightly bigger than the opening 206 to cover the opening 206 on one (in FIG. 2 - upper) side of the plate 204 and to have enough space to be attached to the plate 204. At the same time, the opening 206 is an optional feature of the plate 204, i.e. the opening-free plate 204 may alternatively be used in the method 200 with no significant loss in the quality of the fabricated gas sensing structure.

Step S3 (optional): The CNT film 202 is treated in a low-frequency oxygen plasma to form defect sites along sidewalls of the CNTs 100 constituting the CNT film 202. In this case, it is advantageous to have the opening 206 in the plate 204 because it may provide better results of the plasma treatment of the CNT film 202. This is because the opening 206 allows the CNT film 202 to be treated from above and from below simultaneously (as shown in FIG. 2, it is achieved by arranging the plate 204 with the CNT film 202 between two plate electrodes 208, 210 fed by a plasma generator 212). The defectiveness of the CNTs 100 increases as plasma exposure time increases. In the meantime, this time should not be too long in order not to destroy the structure of the CNT film 202. As noted above, the step S3 is optional and may be omitted with no significant loss in the quality of the fabricated gas sensing structure.

Step S4: The n-type or p-type TMO layer 102 is deposited on the CNT film 202, i.e. on each CNT 100 of the CNT film 202. The step S4 may be performed by using an atomic layer deposition (ALD) technique. In this case, it is required to have the plate 204 made of a material that withstands temperatures used in the ALD technique, such, for example, as aluminum. It should also be noted that the defect sites formed by treating the CNT film 202 in the low-frequency oxygen plasma in the optional step S3 may provide better results of the ALD technique (i.e. better TMO deposition). During the ALD technique, the TMO layer 102 is grown on the CNT film 202 by exposing its surface to alternate gaseous species, which are typically referred to as precursors and reactants. In FIG. 2, precursor molecules 214 are schematically shown as open circles.

Step S5: The noble metal nanoparticles 104 (shown as solid circles in FIG. 2) are deposited on the n-type or p-type TMO layer 102. The step S5 may be performed by using an aerosol doping technique. If the gold nanoparticles 104 are used, the aerosol doping technique may be based on using HAuCl₄ as a major dopant.

Step S6: The CNT film 202 is released from the plate 204. It is the last step of the method 200. The released CNT film 202 having the TMO layer 102 and the nanoparticles 104 deposited thereon represents the gas sensing structure itself. It should be noted that the presence of the opening 206 in the plate 204 may facilitate said releasing. Thus, the plate 204 is used only for the fabrication of the gas sensing structure. After that, the released CNT film 202 is used in a gas sensor design, as will be discussed below in detail.

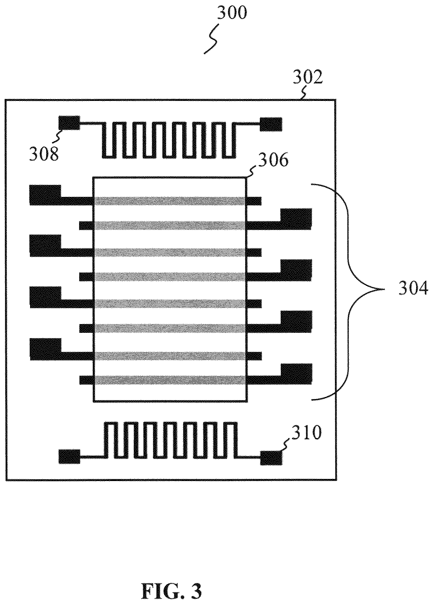

FIG. 3 shows a schematic top view of a gas sensor 300 in accordance with one exemplary example. The gas sensor 300 comprises a substrate 302, a signal electrode structure 304, and a gas sensing structure 306. The gas sensing structure 306 is obtained by using the method 200, i.e. it is the CNT film 202 that has undergone the step S1-S6 (among which the step S3 is optional) of the method 200. Again, the constructive elements of the gas sensor 300 are shown significantly enlarged and without observing the ratio of sizes therebetween in FIG. 3 for convenience of description. The substrate 302 may be made of a dielectric or dielectric-coated material that withstands temperatures in a range from a room temperature up to 400°C. For example, the substrate 302 may be made as an oxidized Si substrate. The signal electrode structure 304 is formed (for example, by means of metal sputtering) on the substrate 302 and comprises a set of spaced signal electrodes, with each two adjacent signal electrodes having a gap therebetween. The gas sensing structure 306 is arranged on the signal electrode structure 304 such that the gas sensing structure 306 bridges the gaps between the signal electrodes. Given this, each pair of the adjacent signal electrodes bridged by the gas sensing structure 306 implements a chemiresistive sensor whose electrical resistance changes in response to changes in the nearby chemical environment (for example, changes of a gas concentration in the air). There are 7 such pairs of the adjacent signal electrodes, i.e. 7 chemiresistive sensors, included in the gas sensor 300 shown in FIG. 3. However, it should be noted that the number and shape of the signal electrodes constituting the signal electrode structure 304 may vary depending on particular applications. In one other exemplary example, the gas sensor 300 may be implemented as a single-gap chemiresistive sensor, in which the signal electrode structure 304 comprises only two signal electrodes and the gas sensing structure 306 bridges the gap therebetween.

As also shown in FIG. 3, the gas sensor 300 further comprises a heater 308 and a thermoresistor 310 that are both formed on the substrate 302 for temperature adjustment and control, respectively. Each of the heater 308 and the thermoresistor 310 is shaped as a meander but is not limited to this shape. The operation of both the thermoresistor 310 and the heater 308 is controlled by control electronics (not shown in FIG. 3).

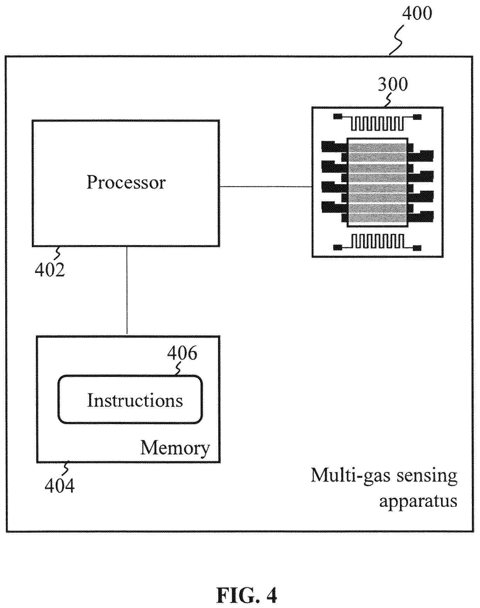

FIG. 4 schematically shows a multi-gas sensing apparatus 400 in accordance with one exemplary example. The apparatus 400 is intended to distinguish between different gases present in the air. To do this, the apparatus 400 comprises a processor 402, a memory 404, and the gas sensor 300. The memory 404 stores processor-executable instructions 406 which cause the operation of the processor 402. It should be noted that the number, arrangement and interconnection of the constructive elements constituting the apparatus 400, which are shown in FIG. 4, are not intended to be any limitation of the present disclosure, but merely used to provide a general idea of how the constructive elements may be implemented within the apparatus 400. For example, the apparatus 400 may further comprise different signal processing means, such, for example, as amplifiers, comparators, etc., as well as different display means. Moreover, if the apparatus 400 is implemented as an individual device, the apparatus 400 may further comprise a transceiving means configured to communicate the results of its operation to a remote monitoring center.

The processor 402 may be implemented as a central processing unit (CPU), general-purpose processor, single-purpose processor, microcontroller, microprocessor, application specific integrated circuit (ASIC), field programmable gate array (FPGA), digital signal processor (DSP), complex programmable logic device, or the like. It is worth noting that the processor 402 may be implemented as any combination of the aforesaid. As an example, the processor 402 may be a combination of two or more CPUs, general-purpose processors, etc.

The memory 404 may be implemented as a nonvolatile or volatile memory used in modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 406 stored in the memory 404 may be configured as a computer executable code causing the processor 402 to perform certain operations. The computer executable code for carrying out operations or operations for the examples may be written in any combination of one or more programming languages, such as Java, C, C++, Python, or the like. In some examples, the computer executable code may be in the form of a high-level language or in a pre-compiled form, and be generated by an interpreter (also pre-stored in the memory 404) on the fly.

Being caused by the processor-executable instructions 406, the processor 402 is configured to receive measurement signals from the gas sensor 300 and, based on the measurement signals, detect the presence of different gases, for example, formaldehyde, ethanol, and/or acetone, in the air. Those skilled in the art should understand that these three gases are indicated as one nonrestrictive example. In general, there should be at least three chemiresistive sensors (i.e. at least three pairs of the adjacent signal electrodes bridged by the gas sensing structure 306) in the gas sensor 300 to provide the possibility of selectively detecting and distinguishing between formaldehyde, ethanol, and acetone in the air. Moreover, in one exemplary example, the processor 402 may perform said detecting by using a pattern recognition algorithm, such, for example, as Linear Discriminant Analysis (LDA), Principal Component Analysis (PCA), etc.

### Example

By using the method 200, several gas sensing structures 306 were fabricated as follows.

The CNT film 202 in each gas sensing structure 306 was represented by a SWCNT film synthesized by the aerosol (floating catalyst) chemical vapor deposition technique in the step S1 of the method 200. SWCNTs were collected on a filter as a randomly oriented network of SWCNTs. The collection time was tuned to prepare the SWCNT film with a transmittance of 80% at a wavelength of 550 nm. The SWCNT film was then transferred, in the step S2 of the method 200, from the filter to the aluminum plate 204 with the opening 206 of 7-8 mm in diameter to implement the free-standing architecture. Next, the SWCNT film was treated, in the step S3 of the method 200, in the low-frequency oxygen plasma generated by using low-pressure plasma system PICO from DIENER ELECTRONIC GmbH (under the following operational conditions: power - 100 W, oxygen pressure - 0.3 mbar, frequency - 100 kHz) to facilitate the formation of defect sites along sidewalls of the SWCNTs. For different SWCNT films, the plasma exposure time was set to be one of 25, 40, 55, and 100 s in order not to destroy the structure of the SWCNT film. Most of the SWCNT films was treated in the low-frequency oxygen plasma during 55 s.

After that, ZnO was deposited, as the TMO layer 102, on each SWCNT film in the step S4 of the method 200 by using the ALD technique. The deposition of ZnO was performed in a cross-flow R-200 standard reactor (Picosun, Finland) under N₂ pressure of about 2-5 mbar. The deposition of ZnO was carried out with a diethyl zinc (DEZ) precursor at 150 °C and with water as a reactant. A duty cycle was 0.1 s DEZ followed by 3 s of N₂ purging (120 sccm), the reactant (H₂O) was purged for 0.1 s followed by 3 s of N₂ purging (150 sccm). N₂ purging was used to displace the precursor or reactant from a reactor chamber because the growth reaction (i.e. ZnO deposition) is a self-terminated cycle process which includes the alternation of exposure to precursor and exposure to reactant, thereby leading to the stepwise growth of TMO depending on a number of cycles. The number of cycles varied from 20 to 120.

Further, the gold nanoparticles 104 were deposited on the TMO layer 102 made of ZnO in the step S5 of the method 200 by using the aerosol doping technique based on HAuCl₄ as the major dopant. A common nebulizer was used to produce an aerosol using about 30-50 ml of HAuCl₄ solution (HAuCl₄*3H₂O). Each SWCNT film with the ZnO layer 102 covered with aerosol particles was then subjected to thermal treatment, which favors the formation of the gold nanoparticles 104 with no their severe agglomeration due to the operational conditions. The appearance of the gold nanoparticles 104 on the surface of the ZnO layer 102 increases the sensitivity of the gas sensing structure 306.

Finally, the SWCNT film was released from the aluminum plate 204 in the step S6 of the method 200. Thus, there were several gas sensing structures 306 fabricated as described above. These gas sensing structures 306 were then used to fabricate several gas sensors 300.

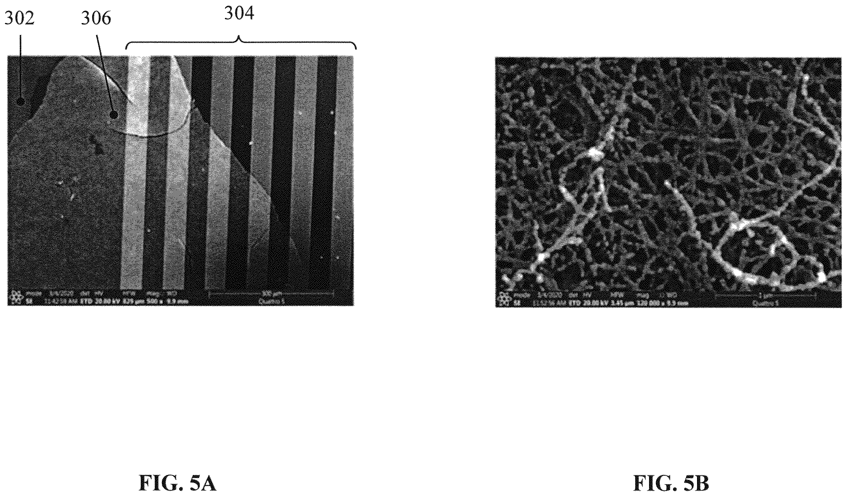

FIGs. 5A and 5B show scanning electron microscope (SEM) images of the gas sensor design and the fabricated gas sensing structure 306, respectively. In particular, FIG. 5A shows the arrangement of the fabricated (transparent) gas sensing structure 306 on the signal electrode structure 304. As can be seen, the gas sensing structure 306 covers a part of the signal electrode structure 304. The signal electrode structure 304 was formed on the oxidized Si substrate 302 of the gas sensor 300 and comprised 18 sputtered Pt strip electrodes (with a 10 nm Ti seed layer). An electrode height was about 150 nm, and a distance between the adjacent electrodes was about 50 µm. Thus, each two adjacent Pt electrodes implement a single chemiresistive sensor. Although not shown in FIG. 5A, there also were the meander Pt heater 308 and the meander Pt thermoresistor 310 formed on the front side of the substrate 302 for temperature adjustment and control. The operation of the heater 308 and the thermoresistor 310 was controlled by a custom-made electronic unit with an accuracy of about 1°C. The size of the whole gas sensor 300 was 5 × 5 mm². According to the SEM image shown in FIG. 5B, it was calculated that each SWCNT in the structure of the SWCNT film had a thickness of about 14-18 nm. It should also be noted that an Energy-dispersive X-ray spectroscopy (EDX) technique was used to confirm Au presence (i.e. the nanoparticles 104) on the surface of the fabricated SWCNT film.

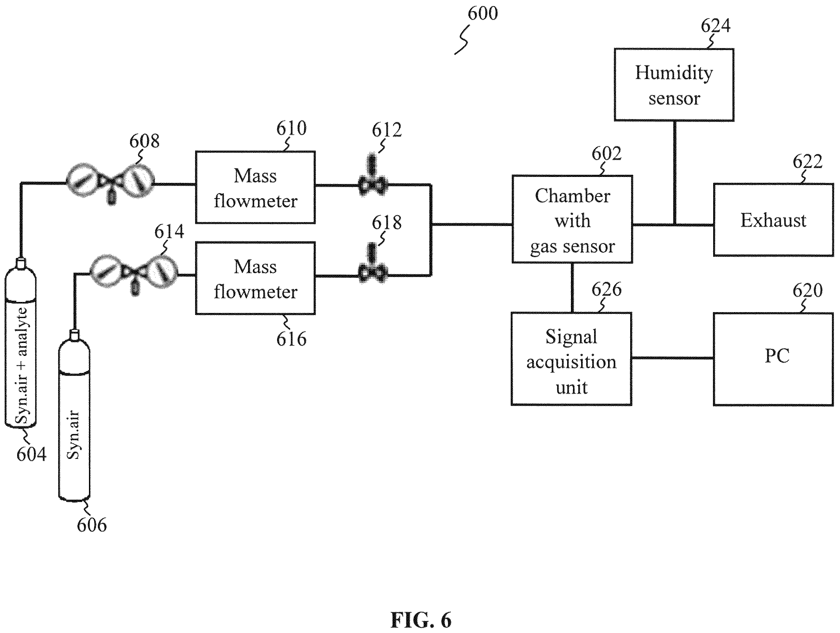

FIG. 6 shows a block diagram of an experimental setup 600 for gas sensing tests in accordance with one exemplary example. In particular, the experimental setup 600 was used to carry out the gas sensing tests on the gas sensors 300 comprising the above-described fabricated gas sensing structures 306. The gas sensors 300 were arranged as a sensor array on a Si/SiO₂ wafer, 5x5 mm², wired into a ceramic card (not shown in FIG. 6) installed inside a gas-tight chamber 602. As an analyte source (i.e. test gases), a calibration gas mixture (the analyte, 50 ppm or 1 ppm, mixed with synthetic air) in a gas vessel 604 was used, and a background atmosphere was synthetic air from a gas vessel 606. The gas vessel 604 is connected to the chamber 602 via a reducer valve 608, a mass flowmeter 610 and an optional gas pressure valve 612. Similarly, the gas vessel 606 is connected to the chamber 602 via a reducer valve 614, a mass flowmeter 616 and an optional gas pressure valve 618. The reducer valves 608 and 614 were used to control a gas pressure of the calibration gas mixture and the synthetic air coming from the gas vessels 604 and 606, respectively. The mass flowmeters 610 and 616 were used to control a mass flow rate of the calibration gas mixture and the synthetic air, respectively. The operation of the mass flowmeters 610 and 616 was controlled by a PC 620 using LabVIEW software. The exhaust gases were released via an exhaust 622 to the environment. The experimental setup 600 further comprised a humidity sensor 624 (in particular, Testo 645 sensor) for monitoring a humidity level inside the chamber 602, and a signal acquisition unit 626 for processing measurement signals from the gas sensors 300 and providing the processing results to the PC 620 for their display and analysis.

By using the experimental setup 600, formaldehyde, ethanol and acetone analytes were tested. A constant flow mode with a flowrate of air/analyte (i.e. gas vapors of interest) mixed with air to be 100 or 50 sccm was used. Volatile organic vapors (formaldehyde, ethanol, isopropanol and acetone) were mixed with air to provide a desired concentration, 100 ppb, 200 ppb, 500 ppb and 5... 50 ppm, using the mass flowmeters 610 and 616. The exposure of the gas sensors 300 to each analyte was done by several pulses to check reproducibility and other relevant parameters. The gas sensors 300 were tested in a wide temperature range, i.e. from a room temperature up to 350 °C. The sensor response was calculated as follows: S = (R_{b} - R_{g}) * 100%/R_{g}, where R_{b} is the baseline resistance of the gas sensor 300 in synthetic air, and R_{g} is its resistance at the analyte exposure (in case of the resistance decrease). In case of the resistance increase, the following expression was used: (R_{g} - R_{b}) * 100%/R_{b}.

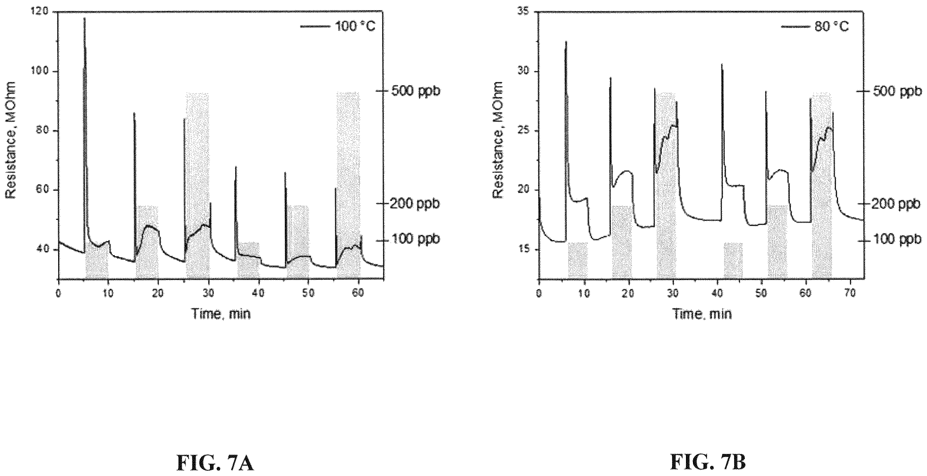

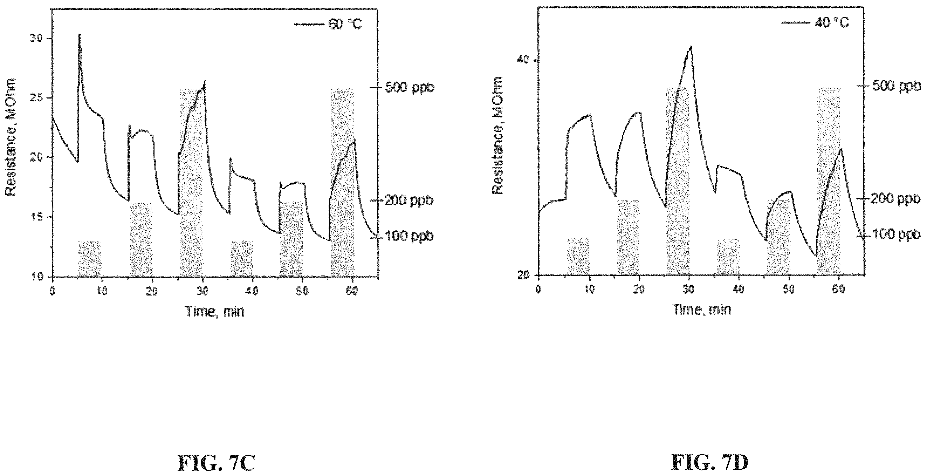

FIGs. 7A-7D show responses of one of the fabricated gas sensors 300 to formaldehyde (HCOH) with concentrations 100 ppb, 200 ppb and 500 ppb in the calibration gas mixture with air at temperatures 100, 80, 60 and 40°C. In particular, each response is represented by a dependence of the sensor resistance in MOhm on time in min. One can easily find a rather pronounced change in the sensor resistance at the appearance of HCOH in the air (which corresponds to the pulses on the dependences shown in FIGs. 7A-7D). Moreover, the responses are rather reproducible - they show similar values when the pulses are repeated. The response time is in a range of 8-18 s, achieving 5 s (given a pipeline length between the place of the reducer valve 608 and the chamber 602, as well as a flow rate). As temperature decreases, the response values increase, highly pronounced at 60°C. The calculated response follows the concentration dependence. The concentration increase yields a greater response - the maximum response value is equal to 94% at 60°C to HCOH with concentration 500 ppb, and the mean response value is about 75%.

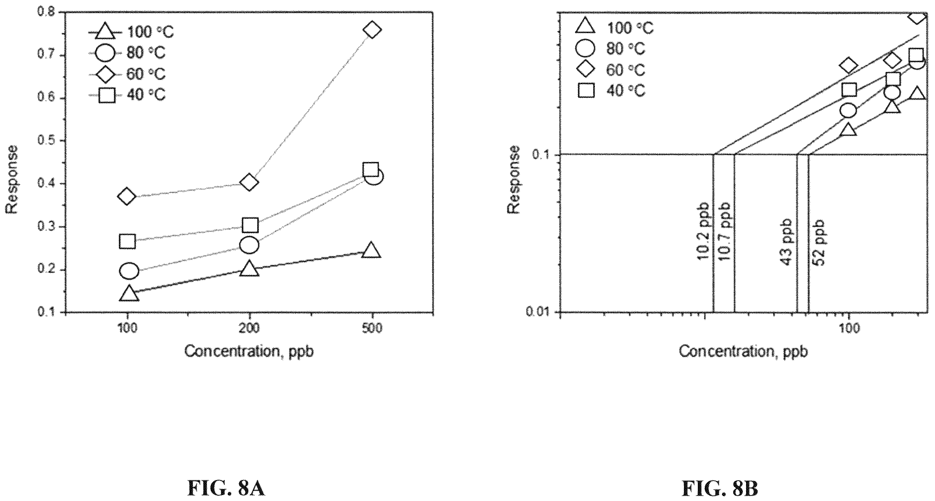

FIGs. 8A and 8B show a response-concentration dependence and a limit of detection, respectively, of the gas sensor 300, which were obtained by using the dependences shown in FIGs. 7A-7D. The limit of detection was evaluated as an intersection of concentration trend lines with the line corresponding to 10% of the response (which is considered to be an acceptable value used in the industry to judge whether a material is good for sensor fabrication). As a result, it was found that the limit of detection is about 10.2 and 10.7 ppb for 60 and 40°C, respectively, and 43 and 52 ppb for 80 and 100°C, respectively. In FIGs. 8A and 8B, the response was calculated as (R_{g} - R_{b})/R_{b}.

Although the response of each chemiresistive sensor (i.e. each pair of the adjacent signal electrodes bridged by the gas sensing structure 306) included in the gas sensor 300 is not selective to an analyte type, it is possible to evaluate the analyte type by analyzing the measurement signals obtained from at least three chemiresistive sensors (i.e. at least three pairs of the adjacent signal electrodes bridged by the gas sensing structure 306). As noted above, such an analysis may be made by using the pattern recognition algorithm. In particular, the LDA was used to classify the analytes present in the calibration gas mixture with air. The measurement signals were normalized prior to the classification.

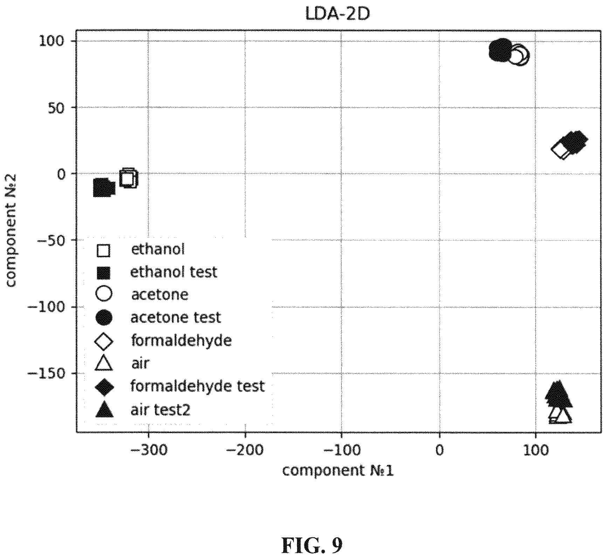

FIG. 9 shows results of the LDA applied to the measurement signals from the gas sensor 300 arranged inside the chamber 602. More specifically, FIG. 9 shows a projection of a vector signal (which combines the measurements signals from eight chemiresistive sensors included in the gas sensor 300) to a plane of first two components (component Nº1 and component Nº2) in the LDA. Train data belong to the first pulse in the measurement signals, while test data reflect the next pulse where the same analyte concentration is used; the data obtained for analyte concentration 50 ppm in the calibration gas mixture with air at temperature 100°C were used. There is an extremely good degree of differentiation of clusters which are formed by the measurement signals from the eight chemiresistive sensors suggesting excellent selectivity. Train and test clusters for formaldehyde overlap, as well as clusters for acetone and air. Clusters relating to ethanol vapors are slightly distanced from each other.

## Claims

1. A gas sensing structure (306) comprising:
a carbon nanotube, CNT, film (100);
an n-type or p-type transition metal oxide, TMO, layer (102, 202) deposited on the CNT film (100); and
noble metal nanoparticles (104) deposited on the n-type or p-type TMO layer (102, 202),
**characterized in that** the CNT film (100) has a thickness of 20 to 100 nm, and
**in that** the n-type or p-type TMO layer (102, 202) has a thickness of 0.5 to 15 nm.

2. The gas sensing structure (306) of claim 1, wherein the CNT film (100) is made of single-walled CNTs.

3. The gas sensing structure (306) of claim 1 or 2, wherein the n-type or p-type TMO layer (102, 202) comprises one of Mn₃O₄, TiO₂, ZnO, SnO₂, NiO, Fe₂O₃, and CU₂O.

4. The gas sensing structure (306) of any one of claims 1 to 3, wherein the noble metal nanoparticles (104) are made of Au, Ag, Pt, or Pd.

5. The gas sensing structure (306) of any one of claims 1 to 4, wherein the TMO layer comprises ZnO for detecting formaldehyde, wherein for improving sensitivity of ZnO, ZnO is doped with Mn, Sn or CdO.

6. The gas sensing structure (306) of any one of claims 1 to 5, wherein the n-type or p-type TMO layer (102, 202) has a thickness of 1.2 nm to 8 nm.

7. A method for fabricating a gas sensing structure (306), comprising:
synthesizing a carbon nanotube, CNT, film (100);
arranging the CNT film (100) on a plate (204), wherein the CNT film (100) has a thickness of 20 to 100 nm;
depositing an n-type or p-type transition metal oxide, TMO, layer (102, 202) on the CNT film (100), wherein the n-type or p-type TMO layer (102, 202) has a thickness of 0.5 to 15 nm;
depositing noble metal nanoparticles (104) on the n-type or p-type TMO layer (102, 202); and
releasing the CNT film (100) from the plate (204).

8. The method of claim 7, wherein said synthesizing the CNT film (100) is performed by using an aerosol chemical vapor deposition technique, and wherein the synthesized CNT film (100) comprises single-walled CNTs.

9. The method of claim 7 or 8, wherein the plate (204) has an opening (206) made therethrough, and said arranging the CNT film (100) comprises arranging the CNT film (100) such that the CNT film (100) covers the opening (206) on one side of the plate (204).

10. A gas sensor (300) comprising:
a substrate (302);
a signal electrode structure (304) formed on the substrate (302) and comprising at least two signal electrodes, the at least two signal electrodes having a gap therebetween; and
the gas sensing structure (306) according any one of claims 1 to 6, the gas sensing structure (306) being arranged on the signal electrode structure (304) such that the gas sensing structure (306) bridges the gap between the at least two signal electrodes.

11. The gas sensor (300) of claim 10, wherein the substrate (302) is made of a dielectric or dielectric-coated material that withstands temperatures in a range from a room temperature up to 400 °C.

12. The gas sensor (300) of claim 10 or 11, further comprising a heater (308) and a thermoresistor (310) that are both formed on the substrate (302) for temperature control.

13. The gas sensor (300) of any one of claims 10 to 12, wherein the gas sensor (300) is a formaldehyde, ethanol or acetone detecting sensor.

14. A multi-gas sensing apparatus comprising:
the gas sensor (300) according to any one of claims 10 to 13, wherein the signal electrode structure (304) comprises at least three pairs of the adjacent signal electrodes bridged by the gas sensing structure (306) according any one of claims 1 to 6;
at least one processor (402); and
a memory (404) coupled to the at least one processor (402) and storing processor-executable instructions which, when executed by the at least one processor (402), cause the at least one processor (402) to:
receive measurement signals from the gas sensor (300); and
based on the measurement signals, determine whether there is at least one of formaldehyde, ethanol and acetone in ambient air.

15. The apparatus of claim 14, wherein the at least one processor (402) is configured to determine whether there is at least one of formaldehyde, ethanol and acetone in ambient air by using a pattern recognition algorithm.

## Patentansprüche

1. Gaserfassungsstruktur (306), umfassend:
einen Kohlenstoffnanoröhrenfilm, CNT-Film, (100);
eine auf dem CNT-Film (100) abgeschiedene n-Typ- oder p-Typ-Übergangsmetalloxidschicht, TMO-Schicht, (102, 202);
und
Edelmetallnanopartikel (104), die auf der n-Typ- oder p-Typ-TMO-Schicht (102, 202) abgeschieden sind, **dadurch gekennzeichnet, dass** der CNT-Film (100) eine Dicke von 20 bis 100 nm aufweist, und dadurch, dass die n-Typ- oder p-Typ-TMO-Schicht (102, 202) eine Dicke von 0,5 bis 15 nm aufweist.

2. Gaserfassungsstruktur (306) nach Anspruch 1, wobei der CNT-Film (100) aus einwandigen CNTs besteht.

3. Gaserfassungsstruktur (306) nach Anspruch 1 oder 2, wobei die n-Typ- oder p-Typ-TMO-Schicht (102, 202) eines von Mn₃O₄, TiO₂, ZnO, SnO₂, NiO, Fe₂O₃ und Cu₂O umfasst.

4. Gaserfassungsstruktur (306) nach einem der Ansprüche 1 bis 3, wobei die Edelmetallnanopartikel (104) aus Au, Ag, Pt oder Pd bestehen.

5. Gaserfassungsstruktur (306) nach einem der Ansprüche 1 bis 4, wobei die TMO-Schicht ZnO zum Detektieren von Formaldehyd umfasst, wobei das ZnO zum Verbessern der Empfindlichkeit von ZnO mit Mn, Sn oder CdO dotiert ist.

6. Gaserfassungsstruktur (306) nach einem der Ansprüche 1 bis 5, wobei die n-Typ- oder p-Typ-TMO-Schicht (102, 202) eine Dicke von 1,2 nm bis 8 nm aufweist.

7. Verfahren zum Herstellen einer Gaserfassungsstruktur (306), umfassend:
Synthetisieren eines Kohlenstoffnanoröhrenfilms, CNT-Films, (100);
Anordnen des CNT-Films (100) auf einer Platte (204), wobei der CNT-Film (100) eine Dicke von 20 bis 100 nm aufweist;
Abscheiden einer n-Typ- oder p-Typ-Übergangsmetalloxidschicht, TMO-Schicht, (102, 202) auf dem CNT-Film (100), wobei die n-Typ- oder p-Typ-TMO-Schicht (102, 202) eine Dicke von 0,5 bis 15 nm aufweist;
Abscheiden von Edelmetallnanopartikeln (104) auf der n-Typ- oder p-Typ-TMO-Schicht (102, 202); und
Lösen des CNT-Films (100) von der Platte (204).

8. Verfahren nach Anspruch 7, wobei das Synthetisieren des CNT-Films (100) unter Verwendung einer chemischen Aerosolgasphasenabscheidungstechnik durchgeführt wird und wobei der synthetisierte CNT-Film (100) einwandige CNTs umfasst.

9. Verfahren nach Anspruch 7 oder 8, wobei die Platte (204) eine dahindurch bestehende Öffnung (206) aufweist und das Anordnen des CNT-Films (100) Anordnen des CNT-Films (100) derart umfasst, dass der CNT-Film (100) die Öffnung (206) auf einer Seite der Platte (204) bedeckt.

10. Gassensor (300), umfassend:
ein Substrat (302);
eine Signalelektrodenstruktur (304), die auf dem Substrat (302) gebildet ist und mindestens zwei Signalelektroden umfasst, wobei die mindestens zwei Signalelektroden einen Spalt dazwischen aufweisen; und
die Gaserfassungsstruktur (306) nach einem der Ansprüche 1 bis 6, wobei die Gaserfassungsstruktur (306) derart auf der Signalelektrodenstruktur (304) angeordnet ist, dass die Gaserfassungsstruktur (306) den Spalt zwischen den mindestens zwei Signalelektroden überbrückt.

11. Gassensor (300) nach Anspruch 10, wobei das Substrat (302) aus einem dielektrischen oder dielektrisch beschichteten Material besteht, das Temperaturen in einem Bereich von Raumtemperatur bis zu 400 °C standhält.

12. Gassensor (300) nach Anspruch 10 oder 11, ferner umfassend eine Heizvorrichtung (308) und einen Thermowiderstand (310), die jeweils zur Temperaturregelung auf dem Substrat (302) gebildet sind.

13. Gassensor (300) nach einem der Ansprüche 10 bis 12, wobei der Gassensor (300) ein Formaldehyd-, Ethanol- oder Acetondetektionssensor ist.

14. Gerät zum Erfassen mehrerer Gase, umfassend:
den Gassensor (300) nach einem der Ansprüche 10 bis 13, wobei die Signalelektrodenstruktur (304) mindestens drei Paare der benachbarten Signalelektroden umfasst, die durch die Gaserfassungsstruktur (306) nach einem der Ansprüche 1 bis 6 überbrückt sind;
mindestens einen Prozessor (402); und
einen Speicher (404), der an den mindestens einen Prozessor (402) gekoppelt ist und prozessorausführbare Anweisungen speichert, die bei Ausführung durch den mindestens einen Prozessor (402), den mindestens einen Prozessor (402) zu Folgendem veranlassen:
Empfangen von Messsignalen von dem Gassensor (300); und
Bestimmen basierend auf den Messsignalen, ob sich in der Umgebungsluft mindestens eines von Formaldehyd, Ethanol und Aceton befindet.

15. Gerät nach Anspruch 14, wobei der mindestens eine Prozessor (402) dazu konfiguriert ist, durch Verwendung eines Mustererkennungsalgorithmus zu bestimmen, ob sich in der Umgebungsluft mindestens eines von Formaldehyd, Ethanol und Aceton befindet.

## Revendications

1. Structure sensible aux gaz (306) comprenant :
un film de nanotube de carbone, CNT (100) ;
une couche d'oxyde de métal de transition, TMO, de type n ou de type p (102, 202) déposée sur le film CNT (100) ;
et
des nanoparticules de métal noble (104) déposées sur la couche TMO de type n ou de type p (102, 202), **caractérisée en ce que** le film CNT (100) a une épaisseur de 20 à 100 nm, et **en ce que** la couche TMO de type n ou de type p (102, 202) a une épaisseur de 0,5 à 15 nm.

2. Structure sensible aux gaz (306) selon la revendication 1, dans laquelle le film CNT (100) est constitué de CNT à paroi simple.

3. Structure sensible aux gaz (306) selon la revendication 1 ou 2, dans laquelle la couche TMO de type n ou de type p (102, 202) comprend l'un des éléments suivants : Mn₃O₄, TiO₂, ZnO, SnO₂, NiO, Fe₂O₃, et Cu₂O.

4. Structure sensible aux gaz (306) selon l'une quelconque des revendications 1 à 3, dans laquelle les nanoparticules de métal noble (104) sont constituées d'Au, d'Ag, de Pt ou de Pd.

5. Structure sensible aux gaz (306) selon l'une quelconque des revendications 1 à 4, dans laquelle la couche TMO comprend du ZnO pour détecter le formaldéhyde, dans laquelle pour améliorer la sensibilité du ZnO, le ZnO est dopé avec du Mn, du Sn ou du CdO.

6. Structure sensible aux gaz (306) selon l'une quelconque des revendications 1 à 5, dans laquelle la couche TMO de type n ou de type p (102, 202) a une épaisseur de 1,2 nm à 8 nm.

7. Procédé de fabrication d'une structure sensible aux gaz (306), comprenant :
la synthèse d'un film de nanotube de carbone, CNT (100) ;
l'agencement du film CNT (100) sur une plaque (204), dans lequel le film CNT (100) a une épaisseur de 20 à 100 nm ;
le dépôt d'une couche d'oxyde de métal de transition, TMO, de type n ou de type p (102, 202) sur le film CNT (100), dans lequel la couche TMO de type n ou de type p (102, 202) a une épaisseur de 0,5 à 15 nm ;
le dépôt de nanoparticules de métal noble (104) sur la couche TMO de type n ou de type p (102, 202) ; et
la libération du film CNT (100) à partir de la plaque (204).

8. Procédé selon la revendication 7, dans lequel ladite synthèse du film CNT (100) est exécutée à l'aide d'une technique de dépôt chimique en phase vapeur par aérosol, et dans lequel le film CNT synthétisé (100) comprend des CNT à paroi simple.

9. Procédé selon la revendication 7 ou 8, dans lequel la plaque (204) a une ouverture (206) pratiquée à travers celle-ci, et ledit agencement du film CNT (100) comprend l'agencement du film CNT (100) de sorte que le film CNT (100) recouvre l'ouverture (206) sur un côté de la plaque (204).

10. Capteur de gaz (300) comprenant :
un substrat (302) ;
une structure d'électrode de signal (304) formée sur le substrat (302) et comprenant au moins deux électrodes de signal, les au moins deux électrodes de signal ayant un espace entre elles ; et
la structure sensible aux gaz (306) selon l'une quelconque des revendications 1 à 6, la structure sensible aux gaz (306) étant agencée sur la structure d'électrode de signal (304) de sorte que la structure sensible aux gaz (306) comble l'espace entre les au moins deux électrodes de signal.

11. Capteur de gaz (300) selon la revendication 10, dans lequel le substrat (302) est constitué d'un matériau diélectrique ou à revêtement diélectrique qui résiste à des températures dans une plage allant d'une température ambiante jusqu'à 400 °C.

12. Capteur de gaz (300) selon la revendication 10 ou 11, comprenant également un élément chauffant (308) et une thermorésistance (310) qui sont tous deux formés sur le substrat (302) pour la commande de la température.

13. Capteur de gaz (300) selon l'une quelconque des revendications 10 à 12, dans lequel le capteur de gaz (300) est un capteur de détection de formaldéhyde, d'éthanol ou d'acétone.

14. Appareil de détection multigaz comprenant :
le capteur de gaz (300) selon l'une quelconque des revendications 10 à 13, dans lequel la structure d'électrode de signal (304) comprend au moins trois paires des électrodes de signal adjacentes reliées par la structure sensible aux gaz (306) selon l'une quelconque des revendications 1 à 6 ;
au moins un processeur (402) ; et
une mémoire (404) couplée à l'au moins un processeur (402) et stockant des instructions exécutables par le processeur qui,
lorsqu'elles sont exécutées par l'au moins un processeur (402), amènent l'au moins un processeur (402) à :
recevoir des signaux de mesure à partir du capteur de gaz (300) ; et
sur la base des signaux de mesure, déterminer s'il y a au moins l'un du formaldéhyde, de l'éthanol et de l'acétone dans l'air ambiant.

15. Appareil selon la revendication 14, dans lequel l'au moins un processeur (402) est configuré pour déterminer s'il y a au moins l'un du formaldéhyde, de l'éthanol et de l'acétone dans l'air ambiant à l'aide d'un algorithme de reconnaissance de formes.
